# EUROPEAN PATENT SPECIFICATION

(11) **EP 4 503 375 B1**
(45) Date of publication and mention of the grant of the patent: **28.10.2026**
(21) Application number: 23916388.4
(22) Date of filing: 30.10.2023
(51) Int. Cl.: H02J 7/00, B60L 3/00, H02J 9/06, B60L 3/04

(54) **POWER SUPPLY CONTROL DEVICE AND METHOD FOR CONTROLLING SAME**
STROMVERSORGUNGSSTEUERUNGSVORRICHTUNG UND VERFAHREN ZUR STEUERUNG DAVON
DISPOSITIF DE COMMANDE D'ALIMENTATION ÉLECTRIQUE ET SON PROCÉDÉ DE COMMANDE

(30) Priority: 11.01.2023 KR 20230004053
(43) Date of publication of application: 05.02.2025
(73) Proprietor: LG Energy Solution, Ltd., Seoul 07335 (KR)
(72) Inventor: CHOI, Hojin, Daejeon 34122 (KR)
(74) Representative: Plasseraud IP
(86) International application number: PCT/KR2023/017019
(87) International publication number: WO 2024/150905

(56) References cited:
- EP-A1- 4 096 052
- WO-A1-2022/241800
- JP-A- 2012 182 911
- KR-A- 20160 073 109
- KR-A- 20180 009 569
- KR-A- 20190 130 901
- KR-A- 20200 051 394
- US-A1- 2013 338 871
- US-A1- 2013 338 871
- US-A1- 2021 104 902

## Description

### [Technical Field]

The present invention relates to a power supply control apparatus and method, and more particularly, to a power supply control apparatus located in a battery system that supplies power to a driving device and a control method thereof.

### [Background Art]

Secondary batteries, capable of recharging and reuse may be used as an energy source for small devices such as mobile phones, tablet PCs, and vacuum cleaners and may also be used as energy source for a medium-to-large devices, such as automobiles, and an energy storage system (ESS) for smart grids.

Secondary batteries may be used in the form of an assembly such as a battery module in which a plurality of battery cells are connected in series or parallel, or a battery pack in which a plurality of battery modules are connected in series or parallel, depending on the requirements of the system. In the case of medium-to-large devices such as electric vehicles, a high-capacity battery system with multiple battery packs connected in parallel may be applied to meet the required capacity of a corresponding device.

Generally, a battery system applied to a device including a driving unit, such as an electric vehicle, includes a switching device disposed on a power supply path between the battery and the driving unit and a controller that controls the switching device. Here, through controlling the switching device, the stored power of the battery can be supplied or blocked to the driving unit.

In a process of driving the device equipped with this general battery system, if an unexpected abnormal condition (for example, abnormal reset or shutdown) occurs in the controller, power supply to the driving unit may be cut off, thereby causing the driving unit to suddenly stop and resulting in a safety accident. The documents US 2013/338871 A1, EP 4 096 052 A1, and KR 2016 0073109 A are known, but fail to overcome the aforementioned issue.

To solve this problem, a solution is needed that can maintain power supply by the battery for a certain period of time so that the device can be stably stopped when an abnormal condition occurs in the controller of the switching unit.

### [Detailed Description of the Invention]

### [Technical Problem]

To obviate one or more problems of the related art, embodiments of the present disclosure provide a power supply control apparatus located in a battery system that supplies power to a driving device.

To obviate one or more problems of the related art, embodiments of the present disclosure also provide a control method for the power supply control apparatus.

### [Technical Solution]

The present invention is set out in the independent claims whereas preferred embodiments and further implementations are outlined in the dependent claims, description and figures.

### [Advantageous Effects]

According to embodiments of the present invention as described above, even if an unexpected abnormal condition occurs in a main controller that controls a switching device, power supply can be maintained until the driving device is safely stopped, thereby improving safety of a device to which the battery system is applied.

### [Brief Description of the Drawings]

FIG. 1 is a block diagram for explaining a general power supply control device.
FIG. 2 is a block diagram for explaining a power supply control apparatus according to embodiments of the present invention.
FIG. 3 is a block diagram for explaining a power supply control apparatus according to embodiments of the present invention.
FIG. 4 is an operational flowchart of the control method of a power supply control apparatus according to the present invention.
FIG. 5 is an operational flowchart of a control method of a power supply control apparatus according to embodiments of the present invention.

- 100:: Battery system
- 110:: battery
- 120:: power supply control apparatus
- 121:: switching device
- 122:: main controller
- 123:: auxiliary controller
- 200:: driving device

### [Best Modes for Practicing the Disclosure]

The invention is defined by the appended claims.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Some terms used herein are defined as follows.

A battery cell is a minimum unit that serves to store power and a battery module refers to an assembly in which a plurality of battery cells are electrically connected.

A battery pack or battery rack refers to a system of a single structure which is assembled by electrically connecting module units, set by a battery manufacturer, and can be monitored and controlled by a battery management apparatus/system (BMS). A battery pack or battery rack may include several battery modules and a battery protection unit or any other protection device.

A battery bank refers to a group of large-scale battery rack systems configured by connecting a plurality of racks in parallel. A bank BMS for a battery bank may monitor and control rack BMSs, each of which manages a battery rack.

A battery assembly may include a plurality of electrically connected battery cells, and refers to an assembly that functions as a power supply source by being applied to a specific system or device. Here, the battery assembly may mean a battery module, a battery pack, a battery rack, or a battery bank, but the scope of the present invention is not limited to these entities.

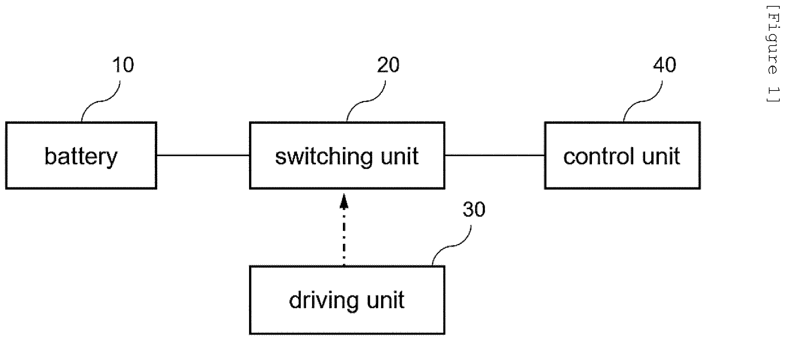

FIG. 1 is a block diagram for explaining a general power supply control device.

More specifically, FIG. 1 shows a battery system applied to a device (e.g., electric vehicle, etc.) including a driving unit 40.

Referring to FIG. 1, a typical battery system may include a battery 10, a switching device 20, and a control unit 30.

The switching device 20 is disposed on the power supply path between the battery 10 and the driving unit 30 and is configured to electrically connect or disconnect the battery 10 and the driving unit 30. Here, the switching device 20 may be a Metal Oxide Semiconductor Field Effect Transistor (MOSFET) provided at an output terminal of the battery 10.

The control unit 40 may control whether to supply power by the battery 10 by controlling the switching device 20 to be in a closed state or an open state. Specifically, the control unit 40 controls the switching device 20 to be in a closed state so that the stored power of the battery 10 is supplied to the driving unit 30 and the driving unit 30 can be driven by the supplied power, or controls the switching device 20 to be in an open state so that the power supplied from the battery 10 can be blocked. Here, the control unit 40 may be a micro controller unit (MCU) included in a battery management system (BMS).

According to this general battery system, when an unexpected abnormal state (for example, abnormal reset or shutdown) occurs in the control unit 40 while the driving unit 30 is driven by the power supplied from the battery 10, the power supply to the driving unit 30 may be cut off, causing the driving unit 30 to suddenly stop, which may cause a safety accident.

The present invention is developed to solve this problem, and relates to a power supply control apparatus and its control method that can maintain power supply by the battery for a certain period of time so that the electric vehicle can stop stably even if an abnormal condition occurs in the control unit of the switching device.

Hereinafter, preferred embodiments according to the present invention will be described in detail with reference to the attached drawings.

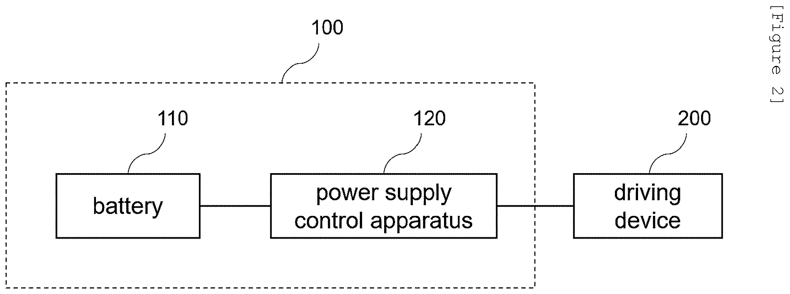

FIG. 2 is a block diagram for explaining a power supply control apparatus according to embodiments of the present invention. In more detail, FIG. 2 shows the battery system 100 applied to a device including a driving device 200.

The battery system 100 according to embodiments of the present invention may be located in a device including the driving device 200 and may supply power to the driving device 200. Here, the device including a driving device may refer to an object driven through electrical energy, such as an electric car, a hybrid car, an electric bike, or an electric bicycle, and the driving device may refer to an object driven through electrical energy.

Referring to FIG. 2, the battery system 100 may include a battery 110 and a power supply control apparatus 120.

In the present specification, the battery 110 may refer to a battery cell or battery assembly. In other words, the battery 110 may mean one or more battery cells, a battery module, a battery pack, a battery rack, or a battery bank.

The power supply control apparatus 120 may be disposed on a power supply path between the battery 110 and the driving device 200 and is a device that may electrically connect or disconnect the battery 110 and the driving device 200. Here, the power supply control apparatus 120 may include a switching device that may be opened and closed by a control signal and one or more controllers that may control the switching device.

The controller included in the power supply control apparatus 120 may control the switching device to be in a closed state or an open state, thereby connecting or blocking the power supply path between the battery 110 and the driving device 200. Specifically, the controller may control the switching device to be in a closed state so that the stored power of the battery 110 is supplied to the driving device 200 and thus, the driving device 200 can be driven using the supplied power, or may control the switching device to be in an open state so that the power supplied from the battery 110 is cut off.

The controllers included in the power supply control apparatus 120 may include a main controller and an auxiliary controller.

The main controller may refer to a main control unit that controls the switching device included in the power supply control apparatus 120. In addition, the auxiliary controller may refer to a sub-control unit that controls the switching device included in the power supply control apparatus 120 in place of the main controller in the instance that an abnormality occurs in the main controller.

When the battery system operates in a power supply mode, the main controller may control the switching device to be closed so that the stored power of the battery 110 is supplied to the driving device 200. If an abnormal condition occurs in the main controller while the driving device 200 is being driven using power supplied from the battery 100, the auxiliary controller may substitute the main controller and control the switching device. Here, the abnormal state may mean a state in which an abnormal reset or shutdown of the main controller has occurred.

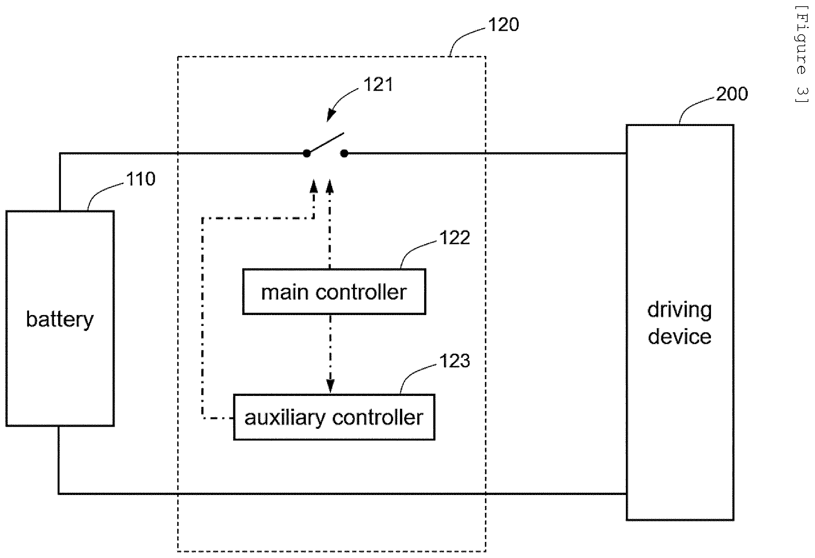

FIG. 3 is a block diagram for explaining a power supply control apparatus according to embodiments of the present invention.

Referring to FIG. 3, the battery system 100 may include a battery 110 and a power supply control apparatus 120.

The power supply control apparatus 120 may include a switching device 121 that may be opened and closed by a control signal, a main controller 122 and an auxiliary controller 123 that control the switching device.

The switching device 121 may be disposed on a power supply path between the battery 110 and the driving device 200 and may electrically connect or disconnect the battery 110 and the driving device 200.

The switching device 121 may be controlled by control signals from the main controller 122 and the auxiliary controller 123. In other words, when a control signal is transferred from either the main controller 122 or the auxiliary controller 123, the switching device 121 may be opened or closed according to the transmitted control signal.

The main controller 122 may refer to a main control unit that controls the switching device included in the power supply control apparatus 120. Here, the main controller may be a micro controller unit (MCU) included in a battery management system (BMS).

The auxiliary controller 123 may refer to a sub- control unit that replaces the main controller 122 and controls the switching device 121 when an abnormality occurs in the main controller 122. Here, the auxiliary controller may be implemented as a separate integrated circuit (IC) that is separate from the MCU of the battery management system (BMS).

In the following, the operation of the power supply control apparatus according to embodiments of the present invention will be described.

When the battery system operates in a power supply mode, the main controller 122 may control the switching device 121 to be in a closed state. Accordingly, stored power of the battery 110 is supplied to the driving device 200 and the driving device 200 may be driven using the power supplied from the battery 100.

While the driving device 200 being operating, the main controller 122 may determine whether an abnormal state has occurred. Here, the main controller 122 may determine whether an abnormal state has occurred based on state information collected through a state information collection device (not shown) provided in the battery system, or based on an abnormal condition occurrence signal transmitted from a higher-level controller (not shown). According to embodiments, the abnormal state may include a state in which an abnormal reset of the main controller or a state in which an abnormal shutdown of the main controller occurs.

When an abnormal condition occurs in the main controller 122, the main controller 122 may transmit a predefined first signal to the auxiliary controller 123. Here, the first signal may refer to a signal for requesting emergency power supply.

When receiving the first signal from the main controller 123, the auxiliary controller 123 may control the switching device 121 to be closed for a predefined period so that emergency power can be supplied to the driving device 200. Here, the time period of emergency power supply may be defined as a specific time (e.g., 20 seconds) or as the time until the driving device 200 is normally stopped. Here, the auxiliary controller 123 may check whether the driving device 200 is stopped through connection with the upper controller or through connection with a controller of the driving device 200.

In an embodiment of the present invention, in the instance that the abnormal state is cleared after the main controller 122 transmits the first signal to the auxiliary controller 123, the main controller 122 may send a predefined second signal to the auxiliary controller 123. Here, the second signal may mean a signal for canceling the emergency power supply request.

In this embodiment, when receiving the first signal from the main controller 123, the auxiliary controller 123 may wait for a preset period of time without immediately controlling the switching device 121 to a closed state. Here, in the instance that the second signal is not transmitted from the main controller 123 within a predetermined period of time, the auxiliary controller 123 may control the switching device 121 to be in a closed state for a predefined period and emergency power can be supplied to the driving device 200.

Meanwhile, when the second signal is transmitted from the main controller 123 within a preset period of time, the auxiliary controller 123 may operate in standby mode without outputting a control signal to the switching device 121.

In other words, when an unexpected abnormal condition occurs in the main controller 122, the main controller 122 may notify the auxiliary controller 123 that it is in a dangerous state requiring emergency power supply. In the instance that the auxiliary controller 123 is not notified of the removal of the dangerous state within a certain period of time, the auxiliary controller 123 may control the switching device to provide temporary power supply to the driving device until the driving device is safely stopped.

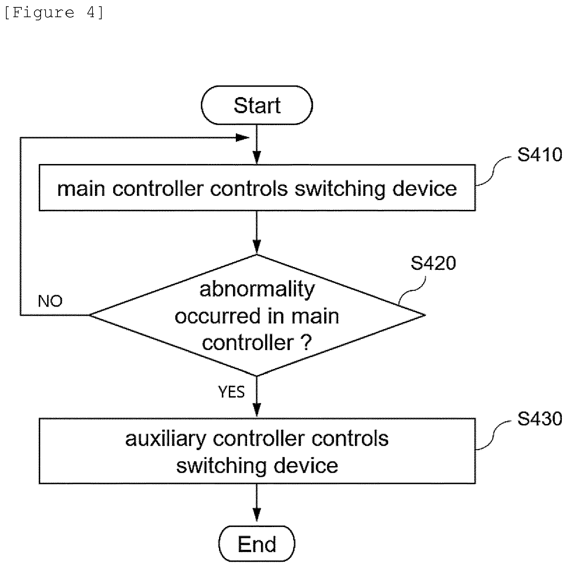

FIG. 4 is an operational flowchart of the control method of a power supply control apparatus according to the present invention.

The power supply control apparatus may include a switching device disposed on a power supply path between the battery and the driving device, a main controller that controls the switching device, and an auxiliary controller.

When the battery system operates in a power supply mode, the main controller may control the switching device to be closed so that stored power of the battery can be supplied to the driving device (S410). Accordingly, the stored power of the battery is supplied to the driving device, and the driving device may be driven using the power supplied from the battery.

While the driving device is being operating, the main controller may determine whether an abnormal state has occurred (S420). Here, the main controller may determine whether an abnormal state has occurred based on state information collected through a state information collection device (not shown) provided in the battery system, or based on an abnormal condition occurrence signal transmitted from a higher-level controller (not shown).

If an abnormal condition has occurred in the main controller (YES in S420), the auxiliary controller may substitute the main controller and control the switching device (S430).

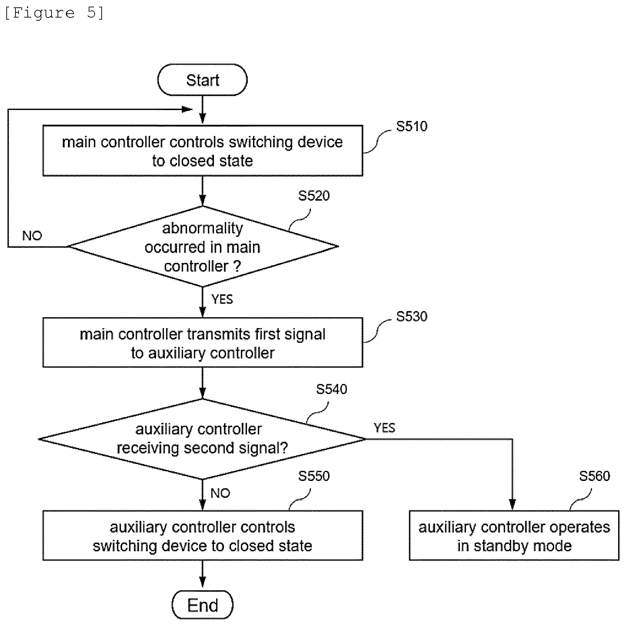

FIG. 5 is an operational flowchart of a control method of a power supply control apparatus according to embodiments of the present invention.

When the battery system operates in a power supply mode, the main controller may control the switching device to a closed state (S510). Accordingly, stored power of the battery can be supplied to the driving device and the driving device may operate using the power supplied from the battery.

While the driving device is being operating, the main controller may determine whether an abnormal state has occurred (S520). According to embodiments, the abnormal state may include a state in which an abnormal reset of the main controller or a state in which an abnormal shutdown of the main controller occurs.

If an abnormal condition occurs in the main controller (YES in S520), the main controller may transmit a predefined first signal to the auxiliary controller (S530). Here, the first signal may refer to a signal for requesting emergency power supply.

If the abnormal state is resolved after the main controller transmits the first signal to the auxiliary controller, the main controller may transmit a predefined second signal to the auxiliary controller. Here, the second signal may mean a signal for canceling the emergency power supply request.

When a first signal is received from the main controller, the auxiliary controller may wait for a preset period of time.

If the second signal is not transmitted from the main controller within a preset period of time (NO in S540), the auxiliary controller may control the switching device to be closed for a predefined period, so that emergency power can be supplied to the driving device (S550).

If the second signal is transmitted from the main controller within a preset period of time (YES in S540), the auxiliary controller may operate in a standby mode without outputting a control signal to the switching device (S560).

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

## Claims

1. A power supply control apparatus (120) located in a battery system (100) which supplies power to a driving device (200), the apparatus comprising:
a switching device (121) disposed on a power supply path between the battery (110) and the driving device to electrically connect or disconnect the battery and the driving device;
a main controller (122) configured to control whether the battery should supply power to the driving device or not by controlling the switching device; and
an auxiliary controller (123) configured to control the switching device instead of the main controller in the instance that an abnormality occurs in the main controller;
wherein the main controller is further configured to transmit a first signal for requesting emergency power supply to the auxiliary controller in the instance that an abnormal condition occurs in the main controller; and
**characterised in that** the auxiliary controller is further configured to, upon receiving the first signal, control the switching device to a closed state for a predefined period to supply emergency power to the driving device.

2. The apparatus of claim 1, wherein the main controller is further configured to output the first signal in the instance that the main controller encounters an abnormal reset or shutdown occurs.

3. The apparatus of claim 1, wherein the main controller is further configured to transmit a second signal for canceling the request for emergency power supply to the auxiliary controller in the instance that the abnormal condition is resolved after the first signal is transmitted.

4. The apparatus of claim 1, wherein the auxiliary controller is further configured to control the switching device to be in a closed state for a predefined period so that the auxiliary controller provides emergency power to the driving device in the instance that a signal canceling the request for emergency power supply is not received from the main controller within a preset period of time after the first signal is received.

5. The apparatus of claim 1, wherein the auxiliary controller is further configured to operate in standby mode without outputting a control signal to the switching device in the instance that a signal canceling the request for emergency power supply is received from the main controller within a preset period of time after the first signal is received.

6. The apparatus of claim 1, wherein the auxiliary controller is further configured to control the switching device to be in a closed state until the driving device is stopped in the instance that an abnormal condition occurs in the main controller while the driving device is operating.

7. A control method of a power supply control apparatus (120) including a switching device (121) disposed on a power supply path between a battery (110) and a driving device (200), a main controller (122) for controlling the switching device, and an auxiliary controller (123), the method comprising:
Controlling (S410), by the main controller, the switching device so that output power of the battery is supplied to the driving device; and
Controlling (S430), by the auxiliary controller, the switching device instead of the main controller in the instance that an abnormality occurs (S420) in the main controller while the driving device is operating;
transmitting, by the main controller, a first signal for requesting emergency power supply to the auxiliary controller in the instance that an abnormal condition occurs in the main controller,
**characterised in that** the controlling, by the auxiliary controller, the switching device includes, upon receiving the first signal, controlling the switching device to a closed state for a predefined period to supply emergency power to the driving device.

8. The method of claim 7, wherein the transmitting, by the main controller, the first signal for requesting emergency power supply to the auxiliary controller includes outputting the first signal in the instance that the main controller encounters an abnormal reset or shutdown.

9. The method of claim 7, further comprising transmitting, by the main controller, a second signal for canceling the request for emergency power supply to the auxiliary controller in the instance that the abnormal condition is resolved after the first signal is transmitted.

10. The method of claim 7, wherein the controlling, by the auxiliary controller, the switching device includes controlling the switching device to be in a closed state for a predefined period so that the auxiliary controller provides emergency power to the driving device in the instance that a signal canceling the request for emergency power supply is not received from the main controller within a preset period of time after the first signal is received.

11. The method of claim 7, wherein the controlling, by the auxiliary controller, the switching device includes the auxiliary controller operating in standby mode without outputting a control signal to the switching device in the instance that a signal canceling the request for emergency power supply is received from the main controller within a preset period of time after the first signal is received.

## Patentansprüche

1. Stromversorgungssteuerungseinrichtung (120), die sich in einem Batteriesystem (100) befindet, das eine Antriebsvorrichtung (200) mit Strom versorgt, wobei die Einrichtung umfasst:
• eine Schaltvorrichtung (121), die auf einem Stromversorgungspfad zwischen der Batterie (110) und der Antriebsvorrichtung angeordnet ist, um die Batterie und die Antriebsvorrichtung elektrisch miteinander zu verbinden oder voneinander zu trennen;
• eine Hauptsteuerung (122), die so konfiguriert ist, dass sie durch Steuern der Schaltvorrichtung steuert, ob die Batterie die Antriebsvorrichtung mit Strom versorgen soll oder nicht; und
• eine Hilfssteuerung (123), die so konfiguriert ist, dass sie die Schaltvorrichtung anstelle der Hauptsteuerung steuert, falls eine Anomalie in der Hauptsteuerung auftritt;
wobei die Hauptsteuerung ferner so konfiguriert ist, dass sie ein erstes Signal zum Anfordern einer Notstromversorgung an die Hilfssteuerung überträgt, falls ein anormaler Zustand in der Hauptsteuerung auftritt; und **dadurch gekennzeichnet, dass** die Hilfssteuerung ferner so konfiguriert ist, dass sie bei Empfang des ersten Signals die Schaltvorrichtung für eine vordefinierte Zeitspanne in einen geschlossenen Zustand steuert, um die Antriebsvorrichtung mit Notstrom zu versorgen.

2. Einrichtung nach Anspruch 1, wobei die Hauptsteuerung ferner so konfiguriert ist, dass sie das erste Signal ausgibt, falls in der Hauptsteuerung ein anormales Zurücksetzen oder Herunterfahren auftritt.

3. Einrichtung nach Anspruch 1, wobei die Hauptsteuerung ferner so konfiguriert ist, dass sie ein zweites Signal zum Abbrechen der Anforderung für eine Notstromversorgung an die Hilfssteuerung überträgt, falls der anormale Zustand behoben ist, nachdem das erste Signal übertragen wurde.

4. Einrichtung nach Anspruch 1, wobei die Hilfssteuerung ferner so konfiguriert ist, dass sie die Schaltvorrichtung so steuert, dass sie für eine vordefinierte Zeitspanne in einem geschlossenen Zustand ist, so dass die Hilfssteuerung die Antriebsvorrichtung mit Notstrom versorgt, falls ein Signal zum Abbrechen der Anforderung für eine Notstromversorgung nicht von der Hauptsteuerung innerhalb einer vorgegebenen Zeitspanne nach Empfang des ersten Signals empfangen wird.

5. Einrichtung nach Anspruch 1, wobei die Hilfssteuerung ferner so konfiguriert ist, dass sie im Standby-Modus arbeitet, ohne ein Steuersignal an die Schaltvorrichtung auszugeben, falls ein Signal zum Abbrechen der Anforderung für eine Notstromversorgung von der Hauptsteuerung innerhalb einer vorgegebenen Zeitspanne nach Empfang des ersten Signals empfangen wird.

6. Einrichtung nach Anspruch 1, wobei die Hilfssteuerung ferner so konfiguriert ist, dass sie die Schaltvorrichtung so steuert, dass sie in einem geschlossenen Zustand ist, bis die Antriebsvorrichtung gestoppt ist, falls ein anormaler Zustand in der Hauptsteuerung auftritt, während die Antriebsvorrichtung in Betrieb ist.

7. Steuerungsverfahren einer Stromversorgungssteuerungseinrichtung (120), die eine Schaltvorrichtung (121), die auf einem Stromversorgungspfad zwischen einer Batterie (110) und einer Antriebsvorrichtung (200) angeordnet ist, eine Hauptsteuerung (122) zum Steuern der Schaltvorrichtung und eine Hilfssteuerung (123) aufweist, wobei das Verfahren umfasst:
• Steuern (S410), durch die Hauptsteuerung, der Schaltvorrichtung, so dass Ausgangsleistung der Batterie an die Antriebsvorrichtung geliefert wird; und
• Steuern (S430), durch die Hilfssteuerung, der Schaltvorrichtung anstelle der Hauptsteuerung, falls eine Anomalie in der Hauptsteuerung auftritt (S420), während die Antriebsvorrichtung in Betrieb ist;
• Übertragen, durch die Hauptsteuerung, eines ersten Signals zum Anfordern einer Notstromversorgung an die Hilfssteuerung, falls ein anormaler Zustand in der Hauptsteuerung auftritt,
**dadurch gekennzeichnet, dass** das Steuern, durch die Hilfssteuerung, der Schaltvorrichtung bei Empfang des ersten Signals das Steuern der Schaltvorrichtung für eine vordefinierte Zeitspanne in einen geschlossenen Zustand umfasst, um die Antriebsvorrichtung mit Notstrom zu versorgen.

8. Verfahren nach Anspruch 7, wobei das Übertragen, durch die Hauptsteuerung, des ersten Signals zum Anfordern einer Notstromversorgung an die Hilfssteuerung das Ausgeben des ersten Signals umfasst, falls in der Hauptsteuerung ein anormales Zurücksetzen oder Herunterfahren auftritt.

9. Verfahren nach Anspruch 7, ferner umfassend das Übertragen, durch die Hauptsteuerung, eines zweiten Signals zum Abbrechen der Anforderung für eine Notstromversorgung an die Hilfssteuerung, falls der anormale Zustand behoben ist, nachdem das erste Signal übertragen wurde.

10. Verfahren nach Anspruch 7, wobei das Steuern, durch die Hilfssteuerung, der Schaltvorrichtung das Steuern der Schaltvorrichtung so umfasst, dass sie für eine vordefinierte Zeitspanne in einem geschlossenen Zustand ist, so dass die Hilfssteuerung die Antriebsvorrichtung mit Notstrom versorgt, falls ein Signal zum Abbrechen der Anforderung für eine Notstromversorgung nicht von der Hauptsteuerung innerhalb einer vorgegebenen Zeitspanne nach Empfang des ersten Signals empfangen wird.

11. Verfahren nach Anspruch 7, wobei das Steuern, durch die Hilfssteuerung, der Schaltvorrichtung das Arbeiten der Hilfssteuerung im Standby-Modus umfasst, ohne ein Steuersignal an die Schaltvorrichtung auszugeben, falls ein Signal zum Abbrechen der Anforderung für eine Notstromversorgung von der Hauptsteuerung innerhalb einer vorgegebenen Zeitspanne nach Empfang des ersten Signals empfangen wird.

## Revendications

1. Dispositif de commande d'alimentation électrique (120) situé dans un système de batterie (100) qui fournit de l'énergie à un dispositif d'entraînement (200), le dispositif comprenant :
• un dispositif de commutation (121) disposé sur un trajet d'alimentation électrique entre la batterie (110) et le dispositif d'entraînement pour connecter ou déconnecter électriquement la batterie et le dispositif d'entraînement ;
• un dispositif de commande principal (122) configuré pour commander si la batterie doit fournir ou non de l'énergie au dispositif d'entraînement en commandant le dispositif de commutation ; et
• un dispositif de commande auxiliaire (123) configuré pour commander le dispositif de commutation au lieu du dispositif de commande principal dans le cas où une anomalie se produit dans le dispositif de commande principal ;
dans lequel le dispositif de commande principal est en outre configuré pour transmettre un premier signal pour demander une alimentation électrique de secours au dispositif de commande auxiliaire dans le cas où une condition anormale se produit dans le dispositif de commande principal ; et **caractérisé en ce que** le dispositif de commande auxiliaire est en outre configuré pour, lors de la réception du premier signal, commander le dispositif de commutation vers un état fermé pendant une période prédéfinie pour fournir une alimentation électrique de secours au dispositif d'entraînement.

2. Dispositif selon la revendication 1, dans lequel le dispositif de commande principal est en outre configuré pour émettre le premier signal dans le cas où le dispositif de commande principal subit une réinitialisation anormale ou un arrêt.

3. Dispositif selon la revendication 1, dans lequel le dispositif de commande principal est en outre configuré pour transmettre un second signal pour annuler la demande d'alimentation électrique de secours au dispositif de commande auxiliaire dans le cas où la condition anormale est résolue après que le premier signal a été transmis.

4. Dispositif selon la revendication 1, dans lequel le dispositif de commande auxiliaire est en outre configuré pour commander le dispositif de commutation pour qu'il soit dans un état fermé pendant une période prédéfinie de sorte que le dispositif de commande auxiliaire fournisse une alimentation électrique de secours au dispositif d'entraînement dans le cas où un signal annulant la demande d'alimentation électrique de secours n'est pas reçu en provenance du dispositif de commande principal dans une période de temps prédéfinie après que le premier signal a été reçu.

5. Dispositif selon la revendication 1, dans lequel le dispositif de commande auxiliaire est en outre configuré pour fonctionner en mode d'attente sans émettre de signal de commande vers le dispositif de commutation dans le cas où un signal annulant la demande d'alimentation électrique de secours est reçu en provenance du dispositif de commande principal dans une période de temps prédéfinie après que le premier signal a été reçu.

6. Dispositif selon la revendication 1, dans lequel le dispositif de commande auxiliaire est en outre configuré pour commander le dispositif de commutation pour qu'il soit dans un état fermé jusqu'à ce que le dispositif d'entraînement soit arrêté dans le cas où une condition anormale se produit dans le dispositif de commande principal pendant que le dispositif d'entraînement fonctionne.

7. Procédé de commande d'un dispositif de commande d'alimentation électrique (120) comprenant un dispositif de commutation (121) disposé sur un trajet d'alimentation électrique entre une batterie (110) et un dispositif d'entraînement (200), un dispositif de commande principal (122) pour commander le dispositif de commutation, et un dispositif de commande auxiliaire (123), le procédé comprenant :
• la commande (S410), par le dispositif de commande principal, du dispositif de commutation de sorte que l'énergie de sortie de la batterie soit fournie au dispositif d'entraînement ; et
• la commande (S430), par le dispositif de commande auxiliaire, du dispositif de commutation au lieu du dispositif de commande principal dans le cas où une anomalie se produit (S420) dans le dispositif de commande principal ;
• la transmission, par le dispositif de commande principal, d'un premier signal pour demander une alimentation électrique de secours au dispositif de commande auxiliaire dans le cas où une condition anormale se produit dans le dispositif de commande principal,
**caractérisé en ce que** la commande, par le dispositif de commande auxiliaire, du dispositif de commutation comprend, lors de la réception du premier signal, la commande du dispositif de commutation vers un état fermé pendant une période prédéfinie pour fournir une alimentation électrique de secours au dispositif d'entraînement.

8. Procédé selon la revendication 7, dans lequel la transmission, par le dispositif de commande principal, du premier signal pour demander une alimentation électrique de secours au dispositif de commande auxiliaire comprend l'émission du premier signal dans le cas où le dispositif de commande principal subit une réinitialisation anormale ou un arrêt.

9. Procédé selon la revendication 7, comprenant en outre la transmission, par le dispositif de commande principal, d'un second signal pour annuler la demande d'alimentation électrique de secours au dispositif de commande auxiliaire dans le cas où la condition anormale est résolue après que le premier signal a été transmis.

10. Procédé selon la revendication 7, dans lequel la commande, par le dispositif de commande auxiliaire, du dispositif de commutation comprend la commande du dispositif de commutation pour qu'il soit dans un état fermé pendant une période prédéfinie de sorte que le dispositif de commande auxiliaire fournisse une alimentation électrique de secours au dispositif d'entraînement dans le cas où un signal annulant la demande d'alimentation électrique de secours n'est pas reçu en provenance du dispositif de commande principal dans une période de temps prédéfinie après que le premier signal a été reçu.

11. Procédé selon la revendication 7, dans lequel la commande, par le dispositif de commande auxiliaire, du dispositif de commutation comprend le fonctionnement du dispositif de commande auxiliaire en mode d'attente sans émettre de signal de commande vers le dispositif de commutation dans le cas où un signal annulant la demande d'alimentation électrique de secours est reçu en provenance du dispositif de commande principal dans une période de temps prédéfinie après que le premier signal a été reçu.
